Europäisches Patentamt

(19) **European Patent Office**

Office européen des brevets

(11) Veröffentlichungsnummer: **0 059 377**
**A2**

(12) **EUROPÄISCHE PATENTANMELDUNG**

(21) Anmeldenummer: **82101218.4**

(22) Anmeldetag: **18.02.82**

(51) Int. Cl.³: **G 01 D 3/02**
**G 01 D 18/00**

(30) Priorität: **21.02.81 DE 3106577**

(43) Veröffentlichungstag der Anmeldung:
**08.09.82 Patentblatt 82/36**

(84) Benannte Vertragsstaaten:
**AT CH DE FR GB IT LI SE**

(71) Anmelder: **E.G.O. Elektro-Geräte Blanc u. Fischer**
**Rote-Tor-Strasse**
**D-7519 Oberderdingen(DE)**

(72) Erfinder: **Koch, Friedrich**
**Goethestrasse 11**
**D-7519 Oberderdingen(DE)**

(74) Vertreter: **Patentanwälte Ruff und Beier**
**Neckarstrasse 50**
**D-7000 Stuttgart 1(DE)**

(54) **Vorrichtung zur Eingabe von Information.**

(57) Die Vorrichtung zur Eingabe von Informationen besitzt einen über drei Leitungen (12 bis 14) mit einer datenverarbeitenden Einrichtung (11) verbundenen Signalgeber (16, 26) sowie einen über eine Eingangsleitung 15 mit der datenverarbeitenden Einrichtung (11) verbundenen Signalkollektor. Auf den drei Ausgangsleitungen (12 bis 14) liegen unterschiedliche Signale an, so daß die datenverarbeitende Einrichtung (11) aufgrund eines Vergleiches der Signale auf den Ausgangsleitungen (12 bis 14) mit den Signalen auf der Eingangsleitung (15) feststellen kann, mit welchem Segment des in mehrere Segmente aufgeteilten Signalgebers (16,26) der Signalkollektor die Eingangsleitung (15) verbindet. Wegen des Vorhandenseins von drei Eingangsleitungen (12 bis 14) kann die datenverarbeitende Einrichtung daher nicht nur die Tatsache einer Bewegung des Signalkollektors, sondern auch den Richtungssinn erkennen. Die derart abgeleiteten Informationen dienen zur Erhöhung bzw. Erniedrigung des Inhaltes eines Zählers.

FIG. 1

PATENTANWÄLTE **RUFF** UND **BEIER** STUTTGART

0059377

Dipl.-Chem. Dr. Ruff
Dipl.-Ing. J. Beier
Dipl.-Phys. Schöndorf

- 4 -

Neckarstraße 50
D-7000 Stuttgart 1
Tel.: (0711) 227051*
Telex 07-23412 erub d

6.Februar 1981 Sf/bt

A 18 568

Anmelderin:  E.G.O. Elektro-Geräte
Blanc u.Fischer

7519 Oberderdingen

## Vorrichtung zur Eingabe von Informationen

Die Erfindung betrifft eine Vorrichtung zur Eingabe von
Informationen in eine datenverarbeitende Einrichtung, insbesondere zur Einstellung bzw. Korrektur einer elektrischen
Digitalanzeige, mit einem Signalgeber und einem mechanisch
betätigbaren, mit der datenverarbeitenden Einrichtung verbundenen und gegenüber dem Signalgeber bewegbaren Signalkollektor.

Eine Vorrichtung der eingangs genannten Art ist bereits
bekannt (DE-AS 28 28 285). Bei dieser bekannten Vorrichtung
ist ein drehbares Bauteil vorhanden, das mit mehreren Nocken
o.dgl.versehen ist, die bei Drehen des Bauteils zwei versetzt angeordnete Schalter schließen. Dadurch werden Impulszüge erzeugt, aus deren gegenseitiger Phasenlage die
Drehrichtung des Bauteiles erkannt werden kann. Natürlich
ist die Frequenz der Impulszüge proportional zur Drehgeschwindigkeit des Bauteiles. Die Impulszüge werden in ein
elektronisches Bauteil eingespeist, wobei zwei Eingänge
vorhanden sein müssen.

Eine ähnliche Vorrichtung ist im Zusammenhang mit elektronischen Waagen ebenfalls bekannt (DE-Z:Internationale Elektronische Rundschau 1965,Nr.7,Seite 381 -389).

Zugelassene Vertreter vor dem Europäischen Patentamt
Professional Representatives before the European Patent Office · Mandataires agréés près l'Office Européen des Brevets
Postscheckkonto Stuttgart (BLZ 600100 70) 429 30-708 · Dresdner Bank Stuttgart (BLZ 600 80000) Konto 9 011 341

A 18 568          - 5 -

Auch bei dieser Vorrichtung sind zwei Eingänge in das Elektronikbauteil erforderlich.

Der Erfindung liegt die Aufgabe zugrunde, eine Vorrichtung der eingangs genannten Art zu verbilligen und derart weiter zu verbessern, daß die Anzahl der benötigten Eingänge der datenverarbeitenden Einrichtung verringert wird.

Zur Lösung dieser Aufgabe ist erfindungsgemäß vorgesehen, daß bei einer Vorrichtung der eingangs genannten Art der Signalgeber mindestens drei voneinander getrennte Segmente aufweist, wobei jedes Segment über je eine von mindestens drei Ausgangsseiten und der Signalkollektor über eine Eingangsleitung mit der datenverarbeitenden Einrichtung verbunden ist. Durch die Aufteilung des Signalgebers in mindestens drei Segmente wird es möglich, von jedem der drei Segmente ein unterschiedliches Signal abgeben zu lassen, so daß die datenverarbeitende Einrichtung mit Hilfe des auf der Eingangsleitung eintreffenden Signals erkennen kann, von welchem der Segmente der Kollektor gerade beeinflußt wird. Daher kann die datenverarbeitende Einrichtung nicht nur die augenblickliche Stellung des Signalkollektors, sondern auch die Bewegungsrichtung sowie die Bewegungsgeschwindigkeit des Signalkollektors erkennen. Daher wird es möglich, mit Hilfe des mechanisch betätigten Signalkollektors Informationen einzugeben, beispielsweise durch Bewegen in eine Richtung den Inhalt eines Zählers um eine dem Bewegungsweg bei der Verschiebung entsprechende Zahl zu erhöhen und bei Bewegung in die andere Richtung zu erniedrigen.

Die Bewegungsrichtung des Signalkollektors kann dabei beispielsweise linear sein, wobei dann ebenfalls die Segmente linear angeordnet sind. Besonders günstig ist es jedoch, den Bewegungsweg als geschlossene Kurve auszubilden. Je höher die Anzahl der Segmente ist, desto größer ist die Auflösungsfähigkeit der von der Erfindung vorgeschlagenen Vorrichtung.

Als Signalgeber kommen beispielsweise Leuchtdioden oder Lichtquellen infrage, die Licht unterschiedlicher Wellenlänge abgeben können. Dies kann beispielsweise durch Zwischenschalten von Farbfiltern geschehen. Der Signalkollektor wäre in diesem Fall beispielsweise ein Fotodetektor, der die unterschiedlichen Signale auflösen kann.

Natürlich können die Lichtquellen auch beispielsweise in der datenverarbeitenden Einrichtung selbst angeordnet sein, so daß als Ausgangs-bzw.Eingangsleitung jeweils Lichtleiter infrage kommen.

Besonders günstig ist es, wenn, wie von der Erfindung weiterhin vorgeschlagen, die datenverarbeitende Einrichtung auf den Ausgangsleitungen zeitlich versetzte Impulszüge gleicher Frequenz an die Segmente abgibt, deren Impulse sich zeitlich nicht überlappen. Hierdurch wird es möglich, einfach durch Vergleich der Impulse auf der Eingangsleitung mit den Impulsen auf den drei Ausgangsleitungen festzustellen, mit welchem Segment der Signalkollektor jeweils in Verbindung steht. Diese Ausbildung ist auch insofern von besonderem Vorteil, als die zeitlich versetzten Impulszüge normalerweise zum Betrieb einer vorhandenen Digitalanzeige sowieso schon vorhanden sind, so daß die Impulszüge nicht extra erzeugt werden müssen.

Um die aus dem Betätigen des Signalkollektors abgeleiteten Impulse weiterverarbeiten zu können, schlägt die Erfindung vor, daß die datenverarbeitende Einrichtung bei Erkennen eines Segmentwechsels je nach der erkannten Bewegungsrichtung des Signalkollektors einen Impuls zur Erhöhung bzw. Erniedrigung des Inhaltes eines Zählers abgibt. Damit kann also die Anzahl der Segmentwechsel gezählt werden.

A 18 568

Selbstverständlich ist es auch möglich, nur jeweils jeden zweiten oder n-ten Segmentwechsel zu zählen.

Um beim Wechsel des Signalkollektors von einem Segment zum nächsten Segment keine Störungen eintreten zu lassen, ist erfindungsgemäß weiter vorgesehen, daß die Kollektorfläche schmaler ist als die Trennfuge zwischen zwei Segmenten. Damit entsteht beim Wechsel vom einen Segment zum anderen ein gewisser Bereich, in dem der Signalkollektor keine Signale abgibt. Da sich jedoch die datenverarbeitende Einrichtung jeweils merkt, mit welchem Segment der Signalkollektor verbunden ist, führt dies nicht zu falschen Anzeigen, da in diesem Fall sich die Einrichtung gemerkt hat, mit welchem Segment der Kollektor verbunden war.

Um eine größere Auflösung, d.h. auch das Erkennen kleiner Bewegungen des Signalkollektors zu ermöglichen, sieht die Erfindung vor, daß der Signalgeber in Gruppen von je 3 Segmenten aufgeteilt ist, wobei die Verbindung der Segmente mit den Ausgangsleitungen sich periodisch wiederholt. Das bedeutet, daß das erste, vierte, siebte usw. Segment mit der Ausgangsleitung 1 verbunden ist, während das zweite, fünfte, achte usw. Segment mit der Ausgangsleitung 2 und das dritte, sechste, neunte usw. Segment mit der Ausgangsleitung 3 verbunden ist. Trotz der erhöhten Anzahl der Segmente sind weiterhin nur drei Ausgangsleitungen bei der datenverarbeitenden Einrichtung erforderlich.

In Weiterbildung ist vorgesehen, daß die Frequenz der Impulszüge auf den Ausgangsleitungen größer ist als die maximal erzeugbare Segment-Wechselfrequenz. Damit soll erreicht werden, daß auch bei sehr schnellem Betätigen des Signalkollektors kein Segment übersprungen wird.

Besonders günstig in Verbindung mit einer digitalen datenverarbeitenden Einrichtung ist es, wenn der Signalkollektor

A 18 568     - 8 -

ein mechanischer Schleifer ist und die Segmente elektrische
Kontaktsegmente sind. In diesem Fall werden die elektrischen
Impulse, die auf den Segmenten ankommen, jeweils von dem
Schleifer abgenommen und über die Eingangsleitung an die
datenverarebeitende Einrichtung weitergegeben. Hierbei ist
der Schleifer je nach seiner Stellung mit einem der Kontaktsegmente verbunden.

Besonders günstig ist es, wenn der Schleifer ein Drehschleifer ist und die Kontaktsegmente konzentrisch um die Drehachse angeordnet sind. Dann kann die Eingabe durch Verdrehen
beispielsweise eines Knopfes erfolgen.

In Weiterbildung der Erfindung ist vorgesehen, daß der
Signalkollektor derart ausgebildet ist, daß er die Signale
der Signalgebersegmente auf eine ortsfest angeordnete, mit
der Eingangsleitung verbundene Signalsammeleinrichtung
überträgt.
Beispielsweise können die Signalgebersegmente Glühlampen mit
Filtern sein, während der Signalkollektor ein Drehkörper mit
einer senkrecht zur Drehachse verlaufenden Blendenöffnung
ist. Durch die Blende gelangt dann das Licht der jeweiligen
Glühlampe auf einen Fotodetektor.

Nach einem weiteren Merkmal der Erfindung ist vorgesehen,
daß der Schleifer zweiarmig ausgebildet ist und mindestens
vier Kontaktsegmente vorhanden sind, von denen eines sich
über einen Winkelbereich von etwa 180° erstreckt, und mit
der Eingangsleitung verbunden ist. Die Verwendung eines
zweiarmigen Schleifers hat den Vorteil, daß die Drehachse
des Schleifers nicht über einen zweiten Schleifer mit der
Eingangsleitung verbunden sein muß.

A 18 568          - 9 -

Weitere Einzelheiten und Vorzüge der Erfindung ergeben sich
aus den Ansprüchen,der folgenden Beschreibung bevorzugter
Ausführungsformen sowie anhand der Zeichnung. Hierbei zeigen:

Fig. 1          eine schematische Anordnung einer ersten
                Ausführungsform mit einem zweiarmigen
                Schleifer;

Fig. 2          eine abgeänderte Ausführungsform der Anord-
                nung nach Fig.1;

Fig. 3          drei Impulszüge;

Fig. 4          eine stark schematisierte weitere
                Ausführungsform.

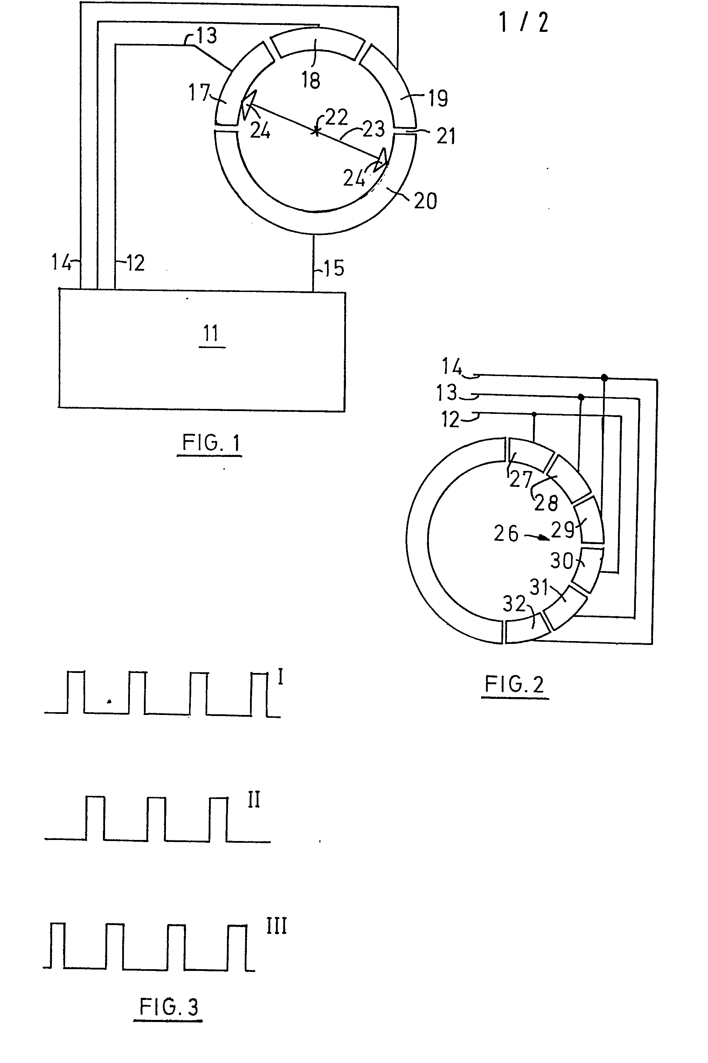

In Figur 1 ist die datenverarbeitende Einrichtung 11 mit
drei Ausgangsleitungen 12 bis 14 und einer Eingangsleitung
15 versehen. Die Ausgangsleitungen 12 bis 14 führen zu einem
Signalgeber 16, der in dem dargestellten Beispiel aus drei
einzelnen Kontaktsegmenten 17, 18 bzw. 19 besteht. Die
einzelnen Kontaktsegmente 17 bis 19 sind elektrisch voneinander isoliert und erstrecken sich jeweils über einen
Winkelbereich von knapp 60°. Jedes der Kontaktsegmente ist
über eine Ausgangsleitung mit der datenverarbeitenden Einrichtung 11 verbunden.

Den einzelnen Kontaktsegmenten 17 bis 19 gegenüberliegend
ist ein viertes Kontaktsegment 20 angeordnet, das sich über
einen Winkelbereich von etwa 180° erstreckt und gegenüber
den benachbarten Kontaktsegmenten 17 und 19 durch je eine
Trennfuge 21 isoliert ist. Dieses vierte Kontaktsegment 20
ist über die Eingangsleitung 15 mit der datenverarbeitenden
Einrichtung 11 verbunden.

Im Mittelpunkt der kreissegmentförmig ausgestalteten Kontaktsegmente 17 bis 20 ist eine Drehachse 22 angeordnet, um die sich ein zweiarmiger Schleifer 23 verdrehen läßt. Dieser zweiarmige Schleifer 23 ist mechanisch mit einer nicht dargestellten Betätigungseinrichtung, z.B. einem Drehknopf, verbunden. An beiden Enden besitzt der Schleifer 23 je einen Schleifschuh 24, der die jeweiligen Kontaktsegmente 17 bis 20 berührt. Die beiden Schleifschuhe 24 sind leitend miteinander verbunden. In der in Fig. 1 dargestellten Stellung ist somit das Kontaktsegment 17 über den Schleifer 23 mit dem Kontaktsegment 20 verbunden. Die datenverarbeitende Einrichtung 11 kann daher durch einen Vergleich der auf der Ausgangsleitung 12 und der Eingangsleitung 15 vorhandenen Signale feststellen, daß bei der dargestellten, Stellung des Schleifers 23 dieser mit dem Kontaktsegment 17 verbunden ist. Wird der Schleifer 23 in Uhrzeigerrichtung weitergedreht, so kann die datenverarbeitende Einrichtung zu einem bestimmten Zeitpunkt feststellen, daß der Schleifer mit seinem einen Schleifschuh 24 nicht mehr das Kontaktsegment 17, sondern das benachbarte Kontaktsegment 18 berührt. Aufgrund der Tatsache, daß nach einem Segmentwechsel nicht mehr das Segment 17, sondern das im Uhrzeigersinn folgende Segment 18 nunmehr mit der Leitung 15 verbunden ist, kann die datenverarbeitende Einrichtung 11 feststellen, daß eine Drehung im Uhrzeigersinn erfolgt ist. Sie kann ebenfalls den Segmentwechsel feststellen und dadurch beispielsweise den Inhalt eines Zählers erhöhen.

Bei einem weiteren Wechsel vom Kontaktsegment 18 zum Kontaktsegment 19 wird dieser Vorgang wiederholt.

Wenn die Einrichtung 11 feststellt, daß nach einer Verbindung der Kontaktsegmente 17 und 20 nun eine Verbindung der Segmente 19 und 20 vorliegt, so kann sie daraus schließen, daß eine Drehung im Gegenuhrzeigersinn stattgefunden hat.

Bei der in Fig. 2 dargestellten abgewandelten Ausführungsform besitzt der Signalgeber 26 sechs einzelne Kontaktsegmente 27 bis 32. Dabei ist das Kontaktsegment 27 und das Kontaktsegment 30, also das erste und vierte Kontaktsegment, mit der Ausgangsleitung 12 verbunden, während Kontaktsegment 28 und 31 mit der Ausgangsleitung 13 und die Kontaktsegmente 29 und 32 mit der Ausgangsleitung 14 verbunden sind.

Durch die vergrößerte Anzahl der Kontaktsegmente wird ein feineres Auflösungsvermögen erreicht, was in diesem Fall bedeutet, daß schon eine Winkeldrehung um 30° zu einer Richtungserkennung führt. Trotzdem ist die Zahl der Leitungen zwischen der datenverarbeitenden Einrichtung 11 und dem Signalgeber 26 nicht vergrößert worden.

Die an die Ausgangsleitungen 12 bis 14 anzulegenden Signale müssen die Forderung erfüllen, daß sie mindestens in einem Charakteristikum voneinander unterschieden sind, so daß die datenverarbeitende Einrichtung 11 erkennen kann, mit welchem der Segmente der Schleifer die Eingangsleitung 15 verbindet. Eine besonders günstige Art der Unterscheidung ist die in Fig.3 schematisch dargestellte, bei der auf den einzelnen Ausgangsleitungen zeitlich versetzte Rechteckimpulse vorhanden sind. Wie sich aus Fig.3 ergibt, in der die Kurve I beispielsweise die Impulse auf der Leitung 12, die Kurve II die Impulse auf Leitung 13 und III die Impulse auf Leitung 14 darstellen, überlappen sich die Impulse zu keinem Zeitpunkt. Daher kann die datenverarbeitende Einrichtung 11 bei Vorhandensein eines Impulses auf der Leitung 15 sofort feststellen, mit welcher der Leitungen 12 bis 14 der Schleifer 23 verbunden ist. Aufgrund des Übergangs von einem Segment zum anderen kann die Einrichtung 11 daher auch feststellen, in welcher Drehrichtung sich der Schleifer 23 bewegt. Diese Art der Unterscheidung der Signale auf den einzelnen Ausgangsleitungen ist besonders von Vorteil, da diese zeitlich versetzten Impulszüge normalerweise    zum Multiplexen einer üblicherweise vorhandenen Digitalanzeige schon vorhanden sind. Diese Signale werden also mehrfach verwendet, ohne daß sich dadurch die Zahl der benötigten Ausgänge der datenverarbeitenden Einrichtung erhöht.

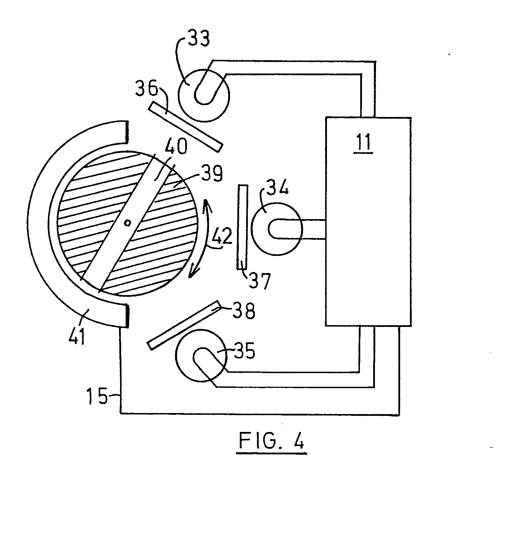

In Figur 4 ist schematisch eine andere Art eines Impulsgebers und eines Impulskollektors dargestellt. Dabei besteht
der Impulsgeber aus drei einzelnen Glühlampen 33, 34 und 35,
wobei vor jede Glühlampe eine Filter 36, 37 bzw. 38 vorgesetzt ist.
Die Glühlampen sind um einen Winkel von etwa 60° versetzt
angeordnet. Die Fiter 36 bis 38 besitzen unterschiedliche
Durchlaßcharakteristika, so daß Licht unterschiedlicher
Wellenlänge aus den einzelnen Filtern austritt.

Der Impulskollektor ist in diesem Falle ein etwa zylindrischer Blendenkörper 39, der einen durch die Drehachse 22
führenden Schlitz 40 aufweist. Der Schlitz ist so bemessen,
daß das aus dem jeweiligen Filter 36, 37 bzw. 38 austretende
Licht durch den Schlitz 40 hindurch auf eine Signalsammeleinrichtung 41 fällt, die über eine Eingangsleitung 15 mit
der datenverarbeitenden Einrichtung 11 verbunden ist. Die
Signalsammeleinrichtung ist beispielsweise ein Fotodetektor,
der in der Lage ist, die unterschiedlichen Signale von den
Filtern 36 bis 38 zu unterscheiden.

Der Blendenkörper 39 läßt sich in Richtung des Doppelpfeiles
42 um die Drehachse 22 verdrehen.

Wieder ist es mit dieser Einrichtung möglich, nicht nur den
Wechsel von einer Lampe zur anderen, sondern auch die Drehrichtung des Blendenkörpers 39 festzustellen.

Statt der als Beispiel genannten unterschiedlichen Filter 36
bis 38 könnten auch unterschiedliche Intensitäten der Glühlampen 33 bis 35 als unterschiedliche Signale verwendet
werden.

PATENTANWÄLTE  RUFF UND BEIER  STUTTGART

**0059377**

Dipl.-Chem. Dr. Ruff
Dipl.-Ing. J. Beier
Dipl.-Phys. Schöndorf

Neckarstraße 50
D-7000 Stuttgart 1
Tel.: (0711) 22 70 51*
Telex 07-23412 erub d

9. Februar 1981 Sf/bt

A 18 568

Anmelderin:  E.G.O. Elektro-Geräte
Blanc u. Fischer

7519 Oberderdingen

Vorrichtung zur Eingabe von Information

A n s p r ü c h e

1. Vorrichtung zur Eingabe von Informationen in eine
datenverarbeitende Einrichtung (11), insbesondere zur
Einstellung bzw. Korrektur einer elektronischen Digitalanzeige, mit einem Signalgeber (16,26) und einem
mechanisch betätigbaren, mit der datenverarbeitenden
Einrichtung (11) verbundenen und gegenüber dem Signalgeber (16,26) bewegbaren Signalkollektor, dadurch
gekennzeichnet, daß der Signalgeber (16,26) mindestens
drei voneinander getrennte Segmente (17 bis 29, 27 bis
32) aufweist, wobei jedes Segment (17 bis 19, 27 bis 32)
über je eine von mindestens drei Ausgangsleitungen (12
bis 14) und der Signalkollektor über eine Eingangsleitung (15) mit der datenverarbeitenden Einrichtung (11)
verbunden ist.

2. Vorrichtung nach Anspruch 1, dadurch gekennzeichnet,
daß die datenverarbeitende Einrichtung (11) auf den
Ausgangsleitungen (12 bis 14) zeitlich versetzte Impulszüge (I bis III) gleicher Frequenz an die Segmen-

Zugelassene Vertreter vor dem Europäischen Patentamt
Professional Representatives before the European Patent Office · Mandataires agréés près l'Office Européen des Brevets
Postscheckkonto Stuttgart (BLZ 600100 70) 42930-709 · Dresdner Bank Stuttgart (BLZ 600 800 00) Konto 9 011 341

te (17 bis 19,27 bis 32) abgibt, deren Impulse sich
zeitlich nicht überlappen.

3.  Vorrichtung nach Anspruch 1 oder 2, dadurch gekennzeichnet, daß die datenverarbeitende Einrichtung (11)
    bei Erkennen eines Segmentwechsels je nach der erkannten Bewegungsrichtung des Signalkollektors einen Impuls
    zur Erhöhung bzw. Erniedrigung des Inhalts eines Zählers abgibt.

4.  Vorrichtung nach einem der Ansprüche 1 bis 3, dadurch
    gekennzeichnet,daß die Kollektorfläche schmaler ist als
    die Trennfuge (22) zwischen zwei Segmenten (17 bis 19,
    27 bis 32).

5.  Vorrichtung nach einem der vorhergehenden Ansprüche,
    dadurch gekennzeichnet, daß der Signalgeber (26) in
    Gruppen von je drei Segmenten (27 bis 32) aufgeteilt
    ist, wobei die Verbindung der Segmente (27 bis 32) mit
    den Ausgangsleitungen (12 bis 14) sich periodisch
    wiederholt.

6.  Vorrichtung nach einem der Ansprüche 2 bis 5, dadurch
    gekennzeichnet, daß die Frequenz der Impulszüge auf den
    Ausgangsleitungen (12 bis 14) größer ist als die maximal
    erzeugbare Segmentwechselfrequenz.

7.  Vorrichtung nach einem der vorhergehenden Ansprüche,
    dadurch gekennzeichnet, daß der Signalkollektor ein
    mechanischer Schleifer (23) ist, und die Segmente(17
    bis 19, 27 bis 32) elektrische Konktaktsegmente sind.

8.  Vorrichtung nach Anspruch 7, dadurch gekennzeichnet,
    daß der Schleifer (23) ein Drehschleifer ist, und die
    Kontaktsegmente (17 bis 19,27 bis 32) konzentrisch um
    die Drehachse (22) angeordnet sind.

A 18 568                    - 3 -

9.  Vorrichtung nach einem der vorhergehenden Ansprüche,
    dadurch gekennzeichnet, daß der Signalkollektor derart
    ausgebildet ist, daß er die Signale der Signalgebersegmente ( 17 bis 19,27 bis 32) auf eine ortsfest angeordnete, mit der Eingangsleitung ( 15) verbundene Signalsammeleinrichtung ( 41) überträgt.

10. Vorrichtung nach einem der Ansprüche 7 bis 9, dadurch
    gekennzeichnet, daß der Schleifer ( 23) zweiarmig ausgebildet ist und mindestens vier Kontaktsegmente ( 17
    bis 20) vorhanden sind, von denen eines ( 20) sich über
    einen Winkelbereich von etwa 180° erstreckt und mit der
    Eingangsleitung ( 15) verbunden ist.

--------

FIG. 1

FIG. 2

FIG. 3

2/2

0059377

FIG. 4